# EUROPEAN PATENT APPLICATION

(11) **EP 3 974 947 A1**
(43) Date of publication of application: **30.03.2022**
(21) Application number: 20825622.2
(22) Date of filing: 18.05.2020
(51) Int. Cl.: G06F 1/32

(54) **CONTROL METHOD, WEARABLE DEVICE, AND STORAGE MEDIUM**

(30) Priority: 17.06.2019 CN 201910522212
(71) Applicant: GUANGDONG OPPO MOBILE TELECOMMUNICATIONS CORP., LTD., Wusha, Chang'an Dongguan Guangdong 523860 (CN)
(72) Inventor: YANG, Xin, Dongguan, Guangdong 523860 (CN)
(74) Representative: Manitz Finsterwald Patent- und Rechtsanwaltspartnerschaft mbB
(86) International application number: PCT/CN2020/090887
(87) International publication number: WO 2020/253446

(57) **Abstract**

A control method for a wearable device (100), a wearable device (100), and a storage medium. The control method for the wearable device (100) comprises: determining whether trigger information collected by a trigger means (110) of the wearable 2 device (100) meets a preset condition; in the case that the trigger information does not meet the preset condition, ignoring the trigger information; in the case that the trigger information meets the preset condition, obtaining the current operation state of the wearable device (100); and according to trigger information, controlling the wearable device (100) to switch the current operation state.

## Description

### PRIORITY INFORMATION

This application claims priority to and benefits of Chinese Patent Application No. 201910522212.9, filed with the China National Intellectual Property Administration on June 17, 2019, the entire content of which is incorporated herein by reference.

### TECHNICAL FIELD

The disclosure relates to a field of electronic technologies, and particularly to a control method, a wearable device and a storage medium.

### BACKGROUND

A wearable device in the related art generally does not have sleep and wakeup functions. When the wearable device is suspended by a user, the wearable device is still working in high power consumption.

### SUMMARY

The disclosure provides a control method, a wearable device and a storage medium.

The embodiment of the disclosure provides a method for controlling a wearable device. The control method includes: determining whether trigger information collected by a trigger device of the wearable device meets a preset condition; in response to the trigger information not meeting the preset condition, ignoring the trigger information; in response to the trigger information meeting the preset condition, obtaining a current running state of the wearable device; and controlling the wearable device to switch the current running state based on the trigger information.

The embodiment of the disclosure provides a wearable device. The wearable device includes a processor, a trigger device, a housing and a supporting component rotatably connected to the housing. The trigger device is disposed on the supporting component and/or the housing, and The processor is connected to the trigger device. The processor is configured to determine whether trigger information collected by the trigger device of the wearable device meets a preset condition; in response to the trigger information not meeting the preset condition, ignore the trigger information; in response to the trigger information meeting the preset condition, obtain a current running state of the wearable device; and control the wearable device to switch the current running state based on the trigger information.

A non-transitory computer readable storage medium having computer executable instructions, when the computer executable instructions are executed by one or more processors, the processor is caused to execute the above method for controlling the above wearable device.

The embodiment of the disclosure provides a method for controlling a wearable device. The wearable device includes a housing and a supporting component rotatably connected to the housing. The supporting component is rotated between a first position and a second position relative to the housing, the wearable device is in a folded state at the first position, and the wearable device is in an unfolded state at the second position. The control method includes: determining whether a duration after the wearable device is switched between the unfolded state and the folded state meets a first preset duration; and in response to the duration meeting the first preset duration, switching the wearable device between a first running state and a second running state, the first running state being a running state corresponding to the unfolded state of the wearable device, and the second running state being a running state corresponding to the folded state of the wearable device.

### BRIEF DESCRIPTION OF THE DRAWINGS

The above and/or additional aspects and advantages of the disclosure may become apparent and easily understood in descriptions of embodiments in combination with the drawings, in which:
FIG. 1 is a perspective view of a wearable device in an embodiment of the disclosure;
FIG. 2 is a plan view of a wearable device in another embodiment of the disclosure;
FIG. 3 is a plan view of a partial structure of a wearable device in an embodiment of the disclosure;
FIG. 4 is a schematic diagram of an adjustment process of a wearable device in an embodiment of the disclosure;
FIG. 5 is another schematic diagram of an adjustment process of a wearable device in an embodiment of the disclosure;
FIG. 6 is a plan view of a partial structure of a wearable device in another embodiment of the disclosure;
FIG. 7 is a plan view of a partial structure of a wearable device in another embodiment of the disclosure;
FIG. 8 is a flowchart of a method for controlling a wearable device in an embodiment of the disclosure;
FIG. 9 is a structural schematic diagram of a wearable device in an embodiment of the disclosure;
FIG. 10 is a schematic diagram of modules of a wearable device in an embodiment of the disclosure;
FIG. 11 is a schematic diagram of a state where a supporting component of a wearable device is located at a first position in an embodiment of the disclosure;
FIG. 12 is a schematic diagram of a state where a supporting component of a wearable device is located at a second position in an embodiment of the disclosure;
FIG. 13 is a flowchart of a method for controlling a wearable device in another embodiment of the disclosure;
FIGS. 14-17 are scene schematic diagrams of a method for controlling a wearable device in an embodiment of the disclosure;
FIG. 18 is a flowchart of a method for controlling a wearable device in another embodiment of the disclosure;
FIG. 19 is another scene diagram of a method for controlling a wearable device in an embodiment of the disclosure;
FIG. 20 is another scene diagram of a method for controlling a wearable device in an embodiment of the disclosure;
FIG. 21 is a flowchart of a method for controlling a wearable device in yet another embodiment of the disclosure;
FIG. 22 is a flowchart of a method for controlling a wearable device in yet another embodiment of the disclosure;
FIG. 23 is yet another scene diagram of a method for controlling a wearable device in an embodiment of the disclosure;
FIG. 24 is yet another scene diagram of a method for controlling a wearable device in an embodiment of the disclosure;
FIGS. 25-30 are flowcharts of a method for controlling a wearable device in another embodiment of the disclosure.

### DETAILED DESCRIPTION

Embodiments of the present disclosure are described in detail below, examples of which are illustrated in the accompanying drawings, in which the same or similar labels represent the same or similar elements or elements with the same or similar functions. The embodiments described below with reference to the drawings are explanatory, are intended to explain the present disclosure and are not to be construed as a limitation of the present disclosure.

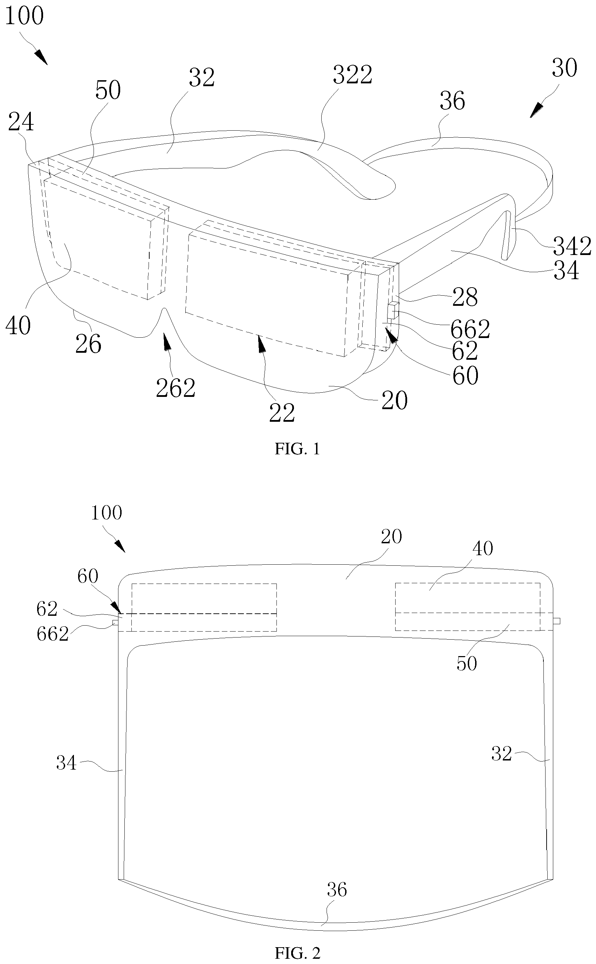

Referring to FIG. 1 and FIG. 2, the wearable device 100 in the embodiment of the disclosure includes a housing 20, a supporting component 30, a display 40, a refractive component 50 and an adjustment mechanism 60.

The housing 20 is an external component of the wearable device 100, with functions of protecting and fixing internal components of the wearable device 100. The internal components are enclosed by the housing 20, which may avoid direct damage of external factors to the internal components.

Specifically, in the embodiment, the housing 20 may be configured to house and fix at least one of the display 40, the refractive component 50, and the adjustment mechanism 60. In the example of FIG. 2, the housing 20 is formed with a housing slot 22, and the display 40 and the refractive component 50 are received in the housing slot 22. The adjustment mechanism 60 is partially exposed from the housing 20.

The housing 20 further includes a housing top wall 24, a housing bottom wall 26, and a housing side wall 28. A notch 262 is formed in the middle of the housing bottom wall 26 toward the housing top wall 24. Or, the housing 20 is substantially "B" shaped. When the user wears the wearable device 100, the wearable device 100 may be erected on the nose bridge of the user through the notch 262, so as to ensure the stability of the wearable device 100 and the wearing comfort of the user. The adjustment mechanism 60 may be partially exposed from the housing side wall 28 so that the user adjusts the refractive component 50.

In addition, the housing 20 may be formed by machining aluminum alloys through a computerized numerical control (CNC) machine tool, or may be injection molded by polycarbonate (PC), or PC and acrylonitrile butadiene styrene plastic (ABS). The specific manufacturing method and specific materials of the housing 20 are not limited here.

The supporting component 30 is configured to support the wearable device 100. When the user wears the wearable device 100, the wearable device 100 may be fixed to the user's head through the supporting component 30. In the example of FIG. 2, the supporting component 30 includes a first bracket 32, a second bracket 34, and an elastic band 36.

The first bracket 32 and the second bracket 34 are symmetrically disposed with respect to the notch 262. Specifically, the first bracket 32 and the second bracket 34 are rotatably disposed on an edge of the housing 20, and when the user does not need to use the wearable device 100, the first bracket 32 and the second bracket 34 may be folded close to the housing 20 to facilitate storage. When the user needs to use the wearable device 100, the first bracket 32 and the second bracket 34 may be unfolded to achieve supporting functions of the first bracket 32 and the second bracket 34.

An end of the first bracket 32 away from the housing 20 is formed with a first bending portion 322, and the first bending portion 322 is bent toward the housing bottom wall 26. In this way, when the user wears the wearable device 100, the first bending portion 322 may be erected on the ears of the user, so that the wearable device 100 is not easily slipped.

Similarly, an end of the second bracket 34 away from the housing 20 is formed with a second bending portion 342. The explanation and description of the second bending portion 342 may refer to the first bending portion 322, which will not be repeated here to avoid redundancy.

The elastic band 36 is detachably connected to the first bracket 32 and the second bracket 34. In this way, when the user performs vigorous activities with the wearable device 100, the wearable device 100 may be further fixed by the elastic band 36, so that the wearable device 100 is prevented from loosening or even falling in vigorous activities. It may be understood that, in other examples, the elastic band 36 may also be omitted.

In the embodiment, the display 40 includes an OLED display screen. The OLED display screen does not need a backlight, which facilitates thinning of the wearable device 100. Moreover, the OLED screen has a large visual angle, low in power consumption, which is beneficial to saving power consumption.

Of course, the display 40 may also be an LED display or a Micro LED display. These displays are merely as examples, which are not limited in embodiments of the present disclosure.

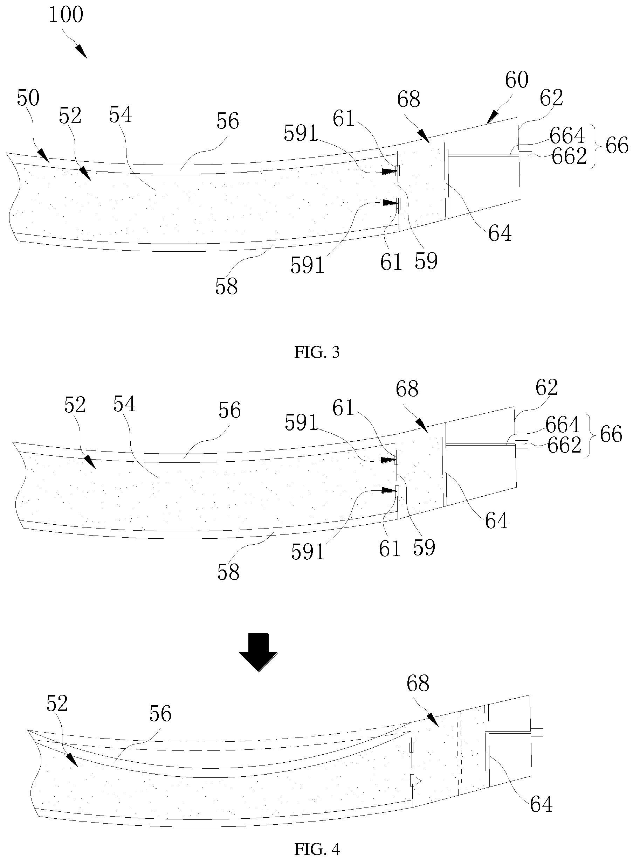

Referring to FIG. 3, the refractive component 50 is disposed on a side of the display 40. The refractive component 50 includes a refractive cavity 52, a light-transmitting liquid 54, a first film layer 56, a second film layer 58, and a side wall 59.

The light-transmitting liquid 54 is set in the refractive cavity 52. The adjusting mechanism 60 is configured to adjust an amount of light-transmitting liquid 54 to adjust a morphology of the refractive component 50. Specifically, the second film layer 58 is arranged relative to the first film layer 56, the side wall 59 is connected to both the first film layer 56 and the second film layer 58, the refractive cavity 52 is enclosed by the first film layer 56, the second film layer 58, and the side wall 59, and the adjustment mechanism 60 is configured to adjust the amount of light-transmitting liquid 54 to change a shape of the first film layer 56 and/or the second film layer 58.

In this way, the refractive function of the refractive component 50 is achieved. Specifically, there are three cases for "changing a shape of the first film layer 56 and/or the second film layer 58": in a first case, changing a shape of the first film layer 56 and not changing a shape of the second film layer 58; in a second case, not changing a shape of the first film layer 56 and changing a shape of the second film layer 58; in a third case, changing a shape of the first film layer 56 and changing a shape of the second film layer 58. It should be noted that, for convenience of explanation, the embodiment is illustrated by taking the first case as an example.

The first film layer 56 may be elastic. It may be understood that, as the amount of light-transmitting liquid 54 in the refractive cavity 52 changes, the pressure in the refractive cavity 52 changes accordingly, so that the morphology of the refractive component 50 changes.

In an example, the adjustment mechanism 60 reduces the amount of light-transmitting liquid 54 in the refractive cavity 52, the pressure in the refractive cavity 52 decreases, a pressure difference between the pressure outside the refractive cavity 52 and the pressure inside the refractive cavity 52 increases, and the refractive cavity 52 is more recessed.

In another example, the adjustment mechanism 60 increases the amount of light-transmitting liquid 54 in the refractive cavity 52, the pressure in the refractive cavity 52 increases, the pressure difference between the pressure outside the refractive cavity 52 and the pressure inside the refractive cavity 52 decreases, and the refractive cavity 52 is more protruded.

In this way, the morphology of the refractive component 50 is adjusted by adjusting the amount of light-transmitting liquid 54.

The adjustment mechanism 60 is connected to the refractive component 50. The adjusting mechanism 60 is configured to adjust the morphology of the refractive component 50 to adjust a diopter of the refractive component 50. Specifically, the adjustment mechanism 60 includes a cavity 62, a slider 64, a drive component 66, an adjusting cavity 68, and a switch 61.

The slider 64 is slidably arranged in the cavity 62, the drive component 66 is connected to the slider 64, the adjusting cavity 68 is defined by both the cavity 62 and the slider 64, the adjusting cavity 68 is connected to the refractive cavity 52 through the side wall 59, and the drive component 66 is configured to drive the slider 64 to slide relative to the cavity 62 to adjust the volume of the adjusting cavity 68 and further adjust the amount of light-transmitting liquid 54 in the refractive cavity 52.

In this way, it is achieved that the volume of the adjusting cavity 68 is adjusted by the slider 64 to adjust the amount of light-transmitting liquid 54 in the refractive cavity 52. In an example, referring to FIG. 4, the slider 64 slides away from the side wall 59, the volume of the adjusting cavity 68 increases, the pressure in the adjusting cavity 68 decreases, the light-transmitting liquid 54 in the refractive cavity 52 enters the adjusting cavity 68, and the first film layer 56 is increasingly recessed inwards.

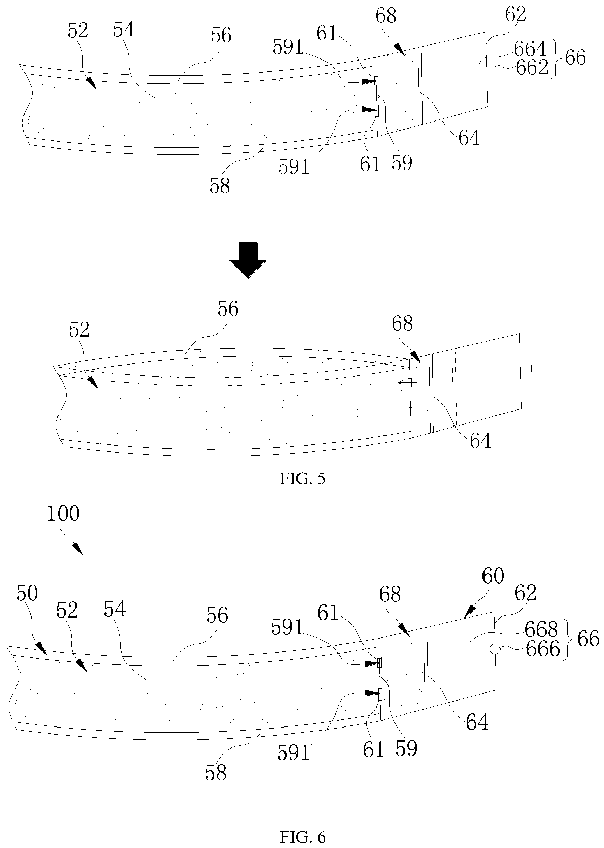

In another example, referring to FIG. 5, the slider 64 slides towards the side wall 59, the volume of the adjusting cavity 68 decreases, the pressure in the adjusting cavity 68 increases, and the light-transmitting liquid 54 in the adjusting cavity 68 enters the refraction cavity 52, and the first film layer 56 is increasingly protruded outwards.

The sidewall 59 is formed with a flow channel 591 that communicates the adjusting cavity 68 with the refractive cavity 52. The adjustment mechanism 60 includes a switch 61 arranged on the flow channel 591, and the switch 61 is configured to control an on/off state of the flow channel 591.

In the embodiment, the number of switches 61 is two, and the two switches 61 are one-way switches, one switch 61 being configured to control the light-transmitting liquid 54 to flow from the adjusting cavity 68 to the refractive cavity 52, and the other switch 61 being configured to control the light-transmitting liquid 54 to flow from the refractive cavity 52 to the adjusting cavity 68.

In this way, the flow of the light-transmitting liquid 54 between the adjusting cavity 68 and the refractive cavity 52 is achieved by the switches 61, so as to maintain the pressure balance on both sides of the side wall 59. As previously described, a change in the volume of the adjusting cavity 68 may lead to a change in the pressure in the adjusting cavity 68, so that the light-transmitting liquid 54 is caused to flow between the adjusting cavity 68 and the refractive cavity 52. The switches 61 control whether the flow of the light-transmitting liquid 54 between the adjusting cavity 68 and the refractive cavity 52 may be achieved by controlling the on/off state of the flow channel 591, so as to control the adjustment of the morphology of the refractive component 50.

In an example, referring to FIG. 4, the switch 61 for controlling the light-transmitting liquid 54 to flow from the refractive cavity 52 to the adjusting cavity 68 is turned on, the slider 64 slides away from the side wall 59, the volume of the adjusting cavity 68 increases, the pressure in the adjusting cavity 68 decreases, the light-transmitting liquid 54 in the refractive cavity 52 enters the adjusting cavity 68 through the switch 61, and the first film layer 56 is increasingly recessed inwards.

In another example, the switch 61 for controlling the light-transmitting liquid 54 to flow from the refractive cavity 52 to the adjusting cavity 68 is turned off, even if the slider 64 slides away from the side wall 59, the volume of the adjusting cavity 68 increases, the pressure in the adjusting cavity 68 decreases, the light-transmitting liquid 54 in the refractive cavity 52 may not enter the adjusting cavity 68, and the morphology of the first film layer 56 does not change.

In another example, referring to FIG. 5, the switch 61 for controlling the light-transmitting liquid 54 to flow from the adjusting cavity 68 to the refractive cavity 52 is turned on, the slider 64 slides towards the side wall 59, the volume of the adjusting cavity 68 decreases, the pressure in the adjusting cavity 68 increases, and the light-transmitting liquid 54 in the adjusting cavity 68 enters the refraction cavity 52 through the switch 61, and the first film layer 56 is increasingly protruded outwards.

In another example, the switch 61 for controlling the light-transmitting liquid 54 to flow from the adjusting cavity 68 to the refractive cavity 52 is turned off, even if the slider 64 slides towards the side wall 59, the volume of the adjusting cavity 68 decreases, the pressure in the adjusting cavity 68 increases, and the light-transmitting liquid 54 in the adjusting cavity 68 may not enter the refraction cavity 52, and the morphology of the first film layer 56 does not change.

The drive component 66 may implement the function of driving the slider 64 to slide based on a variety of structures and principles.

In the examples of FIG. 1, FIG. 2, FIG. 3, FIG. 4 and FIG. 5, the drive component 66 includes a knob 662 and a lead screw 664 connected to the knob 662 and the slider 64. The knob 662 is configured to drive the lead screw 664 to rotate, so that the slider 64 is driven to slide relative to the cavity 62.

In this way, the slider 64 is driven by the knob 662 and the lead screw 664. Due to the matching of the lead screw 664 and the knob 662, the rotary motion of the knob 662 may be converted into a linear motion of the lead screw 664. When the user rotates the knob 662, the lead screw 664 may drive the slider 64 to slide relative to the cavity 62, which leads to the change of the volume of the adjusting cavity 68, adjusting the amount of light-transmitting liquid 54 in the refractive cavity 52. The knob 662 may be exposed from the housing 20 to facilitate rotation by the user.

Specifically, a threaded portion is formed on the knob 662, a threaded portion matching the knob 662 is formed on the lead screw 664, and the knob 662 is threaded with the lead screw 664.

While the knob 662 is rotated, the switch 61 may be turned on correspondingly. In this way, the light-transmitting liquid 54 may flow to ensure the pressure balance on both sides of the side wall 59.

In an example, the knob 662 rotates clockwise, and the slider 64 slides away from the side wall 59, in this case, the switch 61 for controlling the light-transmitting liquid 54 to flow from the refractive cavity 52 to the adjusting cavity 68 is turned on. In another example, the knob 662 rotates anticlockwise, and the slider 64 slides towards the sidewall 59, in this case, the switch 61 for controlling the light-transmitting liquid 54 to flow from the refractive cavity 68 to the adjusting cavity 52 is turned on.

It should be noted that, in the embodiment, the rotation angle of the knob 662 is not correlated with the diopter of the refractive component 50, and the user may rotate the knob 662 to a position with the optimal visual experience. Of course, in other embodiments, the rotation angle of the knob 662 may be correlated with the diopter of the refractive component 50. In this case, it is not limited whether the rotation angle of the knob 662 is correlated with the diopter of the refractive component 50.

Referring to FIG. 6, the drive component 66 includes a gear 666 and a rack 668 engaged with the gear 666, the rack 668 is connected to the gear 666 and the slider 64, and the gear 666 is configured to drive the rack 668 to move, so that the slider 64 is driven to slide relative to the cavity 62.

In this way, it is achieved that the slider 64 is driven by the gear 666 and the rack 668. Due to the matching of the gear 666 and the rack 668, the rotary motion of the gear 666 may be converted into a linear motion of the rack 668. When the user rotates the gear 666, the rack 668 may drive the slider 64 to slide relative to the cavity 62, which leads to the change of the volume of the adjusting cavity 68, adjusting the amount of light-transmitting liquid 54 in the refractive cavity 52. The gear 666 may be exposed from the housing 20 to facilitate rotation by the user.

Similarly, while the gear 666 rotates, the switch 61 may be turned on correspondingly. In this way, the light-transmitting liquid 54 may flow to ensure the pressure balance on both sides of the side wall 59.

In an example, the gear 666 rotates clockwise so that the rack 668 is engaged on the gear 666, and the length of the rack 668 is shorten to pull the slider 64 to move away from the side wall 59, in this case, the switch 61 for controlling the light-transmitting liquid 54 to flow from the refractive cavity 52 to the adjusting cavity 68 is turned on.

In another example, the gear 666 rotates anticlockwise so that the rack 668 engaged on the gear 666 is detached from the gear 666, and the length of the rack 668 increases to drive the slider 64 to move towards the side wall 59, in this case, the switch 61 for controlling the light-transmitting liquid 54 to flow from the refractive cavity 68 to the adjusting cavity 52 is turned on.

Similarly, in the embodiment, the rotation angle of the gear 666 is not correlated with the diopter of the refractive component 50, and the user may rotate the gear 666 to a position with the optimal visual experience. Of course, in other embodiments, the rotation angle of the gear 666 may be correlated with the diopter of the refractive component 50. In this case, it is not limited whether the rotation angle of the gear 666 is correlated with the diopter of the refractive component 50.

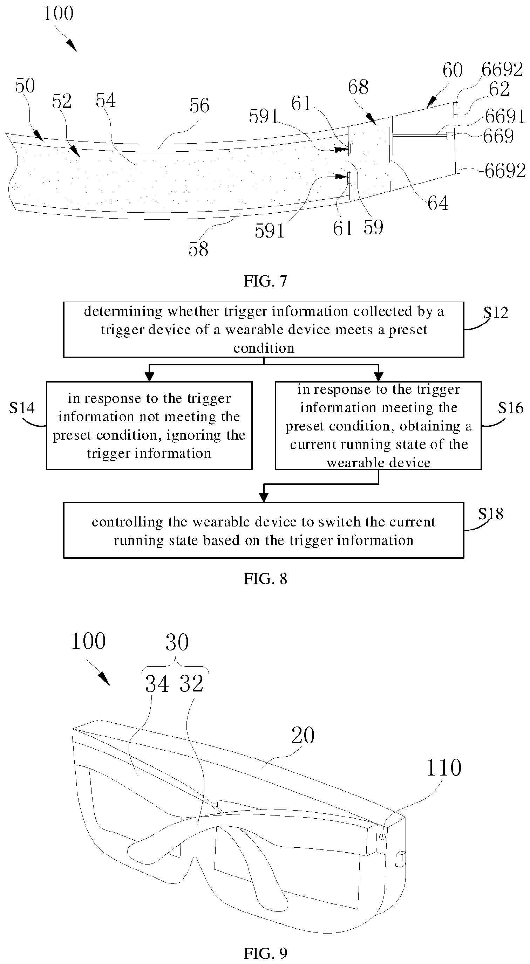

Referring to FIG. 7, the drive component 66 includes a drive motor 669 with a motor shaft 6691 connected to the slider 64, and the drive motor 669 is configured to drive the slider 64 to slide relative to the cavity 62.

In this case, it is achieved that the slider 64 is driven by the drive motor 669. Specifically, the drive motor 669 may be a linear motor. The linear motor, simple in structure, directly generates a linear motion without an intermediate switching mechanism, which may reduce motion inertia and improve dynamic response performance and positioning precision. The slider 64 is driven by the drive motor 668 such that the drive of the slider 64 is editable. For example, the drive motor 668 may be correlated with refractive diopter by calibrating in advance. The user may directly input the refractive diopter, and the drive motor 668 automatically operates to drive the slider 64 to slide to a corresponding position.

Further, the drive component 66 may further include an input unit 6692, the input unit 6692 including not limited to a key, a knob or a touch screen. In the example of FIG. 7, the input unit 6692 is a key, and two keys are respectively disposed on two opposite sides of the cavity 62. The key may be exposed from the housing 20 to facilitate pressing by the user. The key may control a working duration of the drive motor 669 according to a number or duration of external force pressing, so as to control the sliding distance of the slider 64.

Similarly, while the drive motor 669 works, the switch 61 may be turned on correspondingly. In this way, the light-transmitting liquid 54 may flow to ensure the pressure balance on both sides of the side wall 59.

In another example, the user presses one of the two keys and drives the motor shaft 6691 extended, and the motor shaft 6691 pushes the slider 64 to move towards the sidewall 59, in this case, the switch 61 for controlling the light-transmitting liquid 54 to flow from the refractive cavity 68 to the adjusting cavity 52 is turned on.

In another example, the user presses the other of the two keys and drives the motor shaft 6691 shorten, and the motor shaft 6691 pulls the slider 64 to move away from the sidewall 59, in this case, the switch 61 for controlling the light-transmitting liquid 54 to flow from the refractive cavity 52 to the adjusting cavity 68 is turned on.

It should be noted that, the refractive component 50 not only includes the above refractive cavity 52, the light-transmitting liquid 54, the first film layer 56, the second film layer 58, and the side wall 59, as long as the refractive component 50 may achieve the effect of changing a diopter. For example, in other implementations, the refractive component 50 includes a plurality of lenses and drive components. The drive component is configured to drive each lens to move from a receiving position to a refractive position. In this way, the diopter of the refractive component 50 may be changed by a combination of the plurality of lenses. Of course, the drive component may also drive each lens for moving to the refractive position to move on the refractive optical axis, which accordingly changes the diopter of the refractive component 50.

Therefore, the morphology of the above refractive component includes a shape and a state of the refractive component, and for the structure with the refractive cavity 52, the light-transmitting liquid 54, the first film layer 56, the second film layer 58, and the side wall 59, the shape of the first film layer 56 and/or the second film layer 58 is changed to achieve the change of the diopter; and for the structure with the plurality of lenses and the drive components, the state of the lenses is changed to achieve the change of the diopter.

In summary, the wearable device 100 provided in the embodiment includes a display 40, a refractive component 50 and an adjustment mechanism 60. The refractive component 50 is disposed on a side of the display 40. The adjustment mechanism 60 is connected to the refractive component 50 for adjusting the morphology of the refractive component 50 so as to adjust the diopter of the refractive component 50.

For the wearable device 100 in the embodiment of the disclosure, the morphology of the refractive component 50 is adjusted by the adjustment mechanism 60 to adjust the diopter of the refractive component 50, so that the user with refractive errors may see an image displayed on the display 40 clearly, which is conductive to improving the user experience.

Moreover, in the wearable device 100 of the embodiment of the disclosure, the refractive component 50 and the adjustment mechanism 60 may correct the refractive diopter linearly, so that people with different refractive diopters may flexibly wear it. Meanwhile, due to the small volumes of both the refractive component 50 and the adjustment mechanism 60, the wearing experience of the wearable device 100 is not affected. The user does not need to purchase a plurality of lenses, which may reduce price.

The wearable device in the related art still works in high power consumption when the wearable device is suspended by the user. In this way, the wearable device is in a running state for a long time, resulting in relatively high overall power consumption of the wearable device and relatively short battery life time. In order to save power consumption and prolong battery life time, the wearable device may be turned off when not in use and restarted when re-used, however, since the time consumption from shutdown to restart is long, the user experience is seriously affected.

Based on this, referring to FIG. 8 and FIG. 9, the embodiment of the disclosure provides a method for controlling a wearable device 100. The control method includes: at S12, it is determined whether trigger information collected by the trigger device 110 of the wearable device 100 meets a preset condition; at S14, in response to the trigger information not meeting the preset condition, the trigger information is ignored; at S 16, in response to the trigger information meeting the preset condition, a current running state of the wearable device 100 is obtained; and at S18, the wearable device 100 is controlled to switch the current running state based on the trigger information.

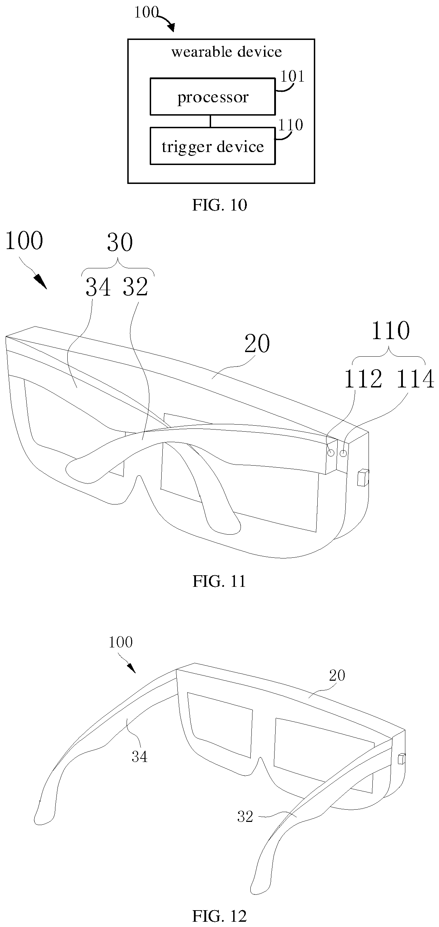

Referring to FIG. 10, the embodiment in the disclosure provides a wearable device 100. The wearable device 100 includes a processor 101, a trigger device 110, a housing 20 and a supporting component 30 rotatably connected to the housing 20. The trigger device 110 is disposed on the supporting component 30 and/or the housing 20, the processor 101 is connected to the trigger device 110, and the processor 101 is configured to determine whether trigger information collected by a trigger device 110 of the wearable device 100 meets a preset condition; and in response to the trigger information not meeting the preset condition, ignore the trigger information; in response to the trigger information meeting the preset condition, obtain a current running state of the wearable device 100; and control the wearable device 100 to switch a current running state based on the trigger information.

For the method for controlling a wearable device 100 and a wearable device 100 in the embodiment of the disclosure, when the trigger information meets the preset condition, the wearable device 100 is controlled to switch the current running state based on the trigger information. The current running state of the wearable device 100 may be switched simply and conveniently, which saves power consumption, extends the battery life time, and thus improves user experiences. In addition, in response to the trigger information not meeting the preset condition, the trigger information is ignored, which may avoid false trigger, and thus enhances the accuracy of switching the current running state.

Specifically, the wearable device 100 may be electronic glasses, electronic clothes, an electronic bracelet, an electronic necklace, an electronic tattoo, a watch, an in-ear headset, a pendant, a headset or other electronic device. The wearable device 100 may be a head mounted display (HMD) of an electronic device or a smart watch. The specific form of the wearable device 100 is not limited here.

It should be noted that, in an embodiment of the disclosure, a method for controlling a wearable device according to the embodiments of the disclosure is explained by taking the wearable device 100 being electronic glasses as an example, which does not represent a limitation to the specific form of the wearable device 100.

In the embodiment of the disclosure, as shown in FIG. 9, the trigger device 110 is an infrared sensor. The trigger device 110 is disposed on the housing 20. The infrared sensor is low in cost, simple in process, easy to implement, and capable of detecting a distance between the supporting component 30 and the housing 20. Therefore, a relative position relationship between the supporting component 30 and the housing 20 may be determined based on the trigger information collected by the infrared sensor. Thus, the wearable device 100 is controlled to switch the current running state based on the trigger information. It may be understood that the trigger device 110 may also be disposed on the supporting component 30. Specifically, the trigger device 110 may be disposed on the first bracket 32 and the second bracket 34 of the supporting component 30.

Of course, the trigger device 110 may also be a microswitch arranged at an end of the first bracket 32 away from the housing 20, and when the first bracket 32 is folded, the microswitch is abutted against the housing 20. When the first bracket 32 is unfolded, the microswitch is separated from the housing 20. The microswitch collects different trigger information respectively when it is abutted against and when it is separated from the housing 20. In this way, the relative position relationship between the supporting component 30 and the housing 20 may be determined based on the trigger information collected by the microswitch.

In addition, the trigger device 110 may also include two triggers that cooperate with each other. In the example of FIG. 11, the trigger device 110 includes a first trigger 112 and a second trigger 114. The first trigger 112 is arranged at an end of the first bracket 32 of the supporting component 30 close to the housing 20, and the second trigger 114 is arranged at the position of the housing 20 corresponding to the first trigger 112. The relative position relationship between the first trigger 112 and the second trigger 114 may be determined based on the trigger information collected by the first trigger 112 and the second trigger 114, which accordingly determines a relative position relationship between the supporting component 30 and the housing 20.

In other examples, the first trigger 112 may be arranged at an end of the first bracket 32 away from the housing 20, and the second trigger 114 may be arranged at a position where the first bracket 112 contacts the housing 20 when the first bracket 112 is folded. In addition, the trigger device 110 may also be disposed on the second bracket 34 and the housing 20 in a similar manner. Or, the number of trigger devices 110 may be two, one of which is disposed on the first bracket 32 and the housing 20 in a manner similar to the above first trigger, and the other of which is disposed on the second bracket 34 and the housing 20 in a manner similar to the above second trigger.

In some embodiments, the first trigger 112 is a magnetic member, and the second trigger 114 is a Hall sensor. The Hall sensor may detect a strength of a magnetic field to determine a distance with the first trigger member 112, which accordingly determines the relative position relationship of the supporting component 30 and the housing 20.

In some other embodiments, the first trigger 112 is a Hall sensor, and the second trigger 114 is a magnetic member. In another embodiments, one of the first trigger 112 and the second trigger 114 may be a microswitch, and the other may be a matching member of the microswitch.

The specific number, specific form, and specific position of the trigger device 110 are not limited here.

In addition, in FIG. 9 and FIG. 11, the wearable device 100 is in a folded state, the first bracket 32 and the second bracket 34 are close to the housing 20, and the first bracket 32 and the second bracket 34 are close, overlapped, or pressed. The wearable device 100 in the folded state facilitates storage.

In FIG. 12, the wearable device 100 is in an unfolded state, the first bracket 32 and the second bracket 34 are unfolded from the housing 20, and the first bracket 32 is separated from the second bracket 34. When the first bracket 32 and the second bracket 34 are unfolded to a maximum extent, the first bracket 32 and the second bracket 34 are substantially parallel and substantially perpendicular to the housing 20. The wearable device 100 in the unfolded state may be fixed to the user's head through the first bracket 32 and the second bracket 34.

At S12, the preset condition may be pre-stored in the wearable device 100. The preset condition may be configured by the user. The preset condition may be downloaded by the user from a relevant network of the wearable device 100. The source of the preset condition is not limited here.

At S14, in response to the trigger information not meeting the preset condition, the trigger information is ignored, which may avoid false trigger, and thus enhance the accuracy of switching the current running state.

For example, when the wearable device 100 is damaged, the connection between the first bracket 32 and the housing 20 is unstable, even if the user does not unfold or fold the supporting component 30, the trigger device 110 sometimes outputs the same trigger information as when the user unfolds the supporting component 30, and sometimes outputs the same trigger information as when the user folds the supporting component 30. In this way, when the preset condition is not considered, the wearable device 100 may continuously switch the state, which is not conducive to prolonging the battery life time and improving the user experience. When the preset condition is considered, it is determined that the trigger information does not meet the preset condition and the trigger information is ignored, so that the above situation may be avoided.

At S16 and S18, the current running state of the wearable device 100 is obtained and the wearable device 100 is controlled to switch the current running state based on the trigger information, which may make the switch of the current running state more accurate.

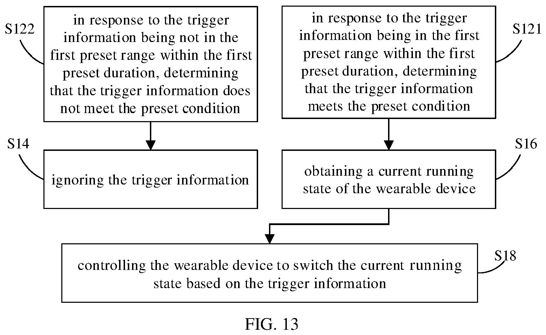

Referring to FIG. 13, in some embodiments, the preset condition includes a first preset duration and a first preset range. S12 includes: at S121, in response to the trigger information being in the first preset range within the first preset duration, it is determined that the trigger information meets the preset condition; and at S122, in response to the trigger information being not in the first preset range within the first preset duration, it is determined that the trigger information does not meet the preset condition.

In some embodiments, the preset condition includes a first preset duration and a first preset range, the processor 110 is configured to determine that the trigger information meets the preset condition in response to the trigger information being in the first preset range within the first preset duration; and determine that the trigger information does not meet the preset condition in response to the trigger information being not in the first preset range within the first preset duration.

In this way, it is achieved to determine whether trigger information collected by a trigger device of the wearable device 100 meets a preset condition. It may be understood that the first preset range is a normal range of trigger information fluctuation caused by the user operation. When the trigger information maintains the range for the first preset duration, it may be considered that the user has indeed performed an operation leading to the trigger information. At this time, the target state may be determined based on the trigger information. At the same time, the current running state of the wearable device 100 is obtained, and the wearable device 100 is controlled to switch the current running state based on the target state and the current running state.

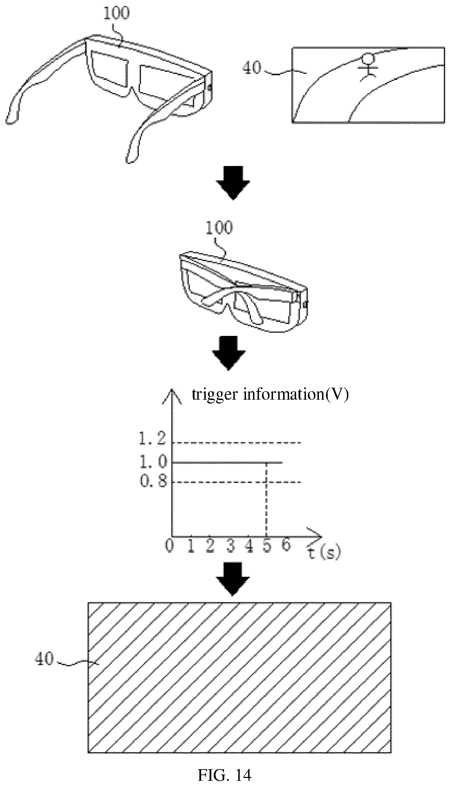

Referring to FIG. 14, in an example, the trigger information includes a voltage, the first preset duration is 5s, and the first preset range is 0.8V-1.2V. Before switching, the supporting component 30 is at a second position, the wearable device 100 is in the unfolded state, the display 40 is playing a video, and the current running state of the wearable device 100 is a working state. The supporting component 30 of the wearable device 100 is folded by the user toward the housing 20, and the trigger device 110 collects trigger information. When the voltage maintains the range of 0.8V-1.2V for 5s, it is determined that the trigger information meets the preset condition. It is determined that the supporting component 30 is at a first position based on the trigger information, the wearable device 100 is in the folded state, and the target state is a sleep state. However, the current running state of the wearable device 100 is obtained to be the working state, in this case, the wearable device 100 is controlled to switch from the working state to the sleep state based on the trigger information.

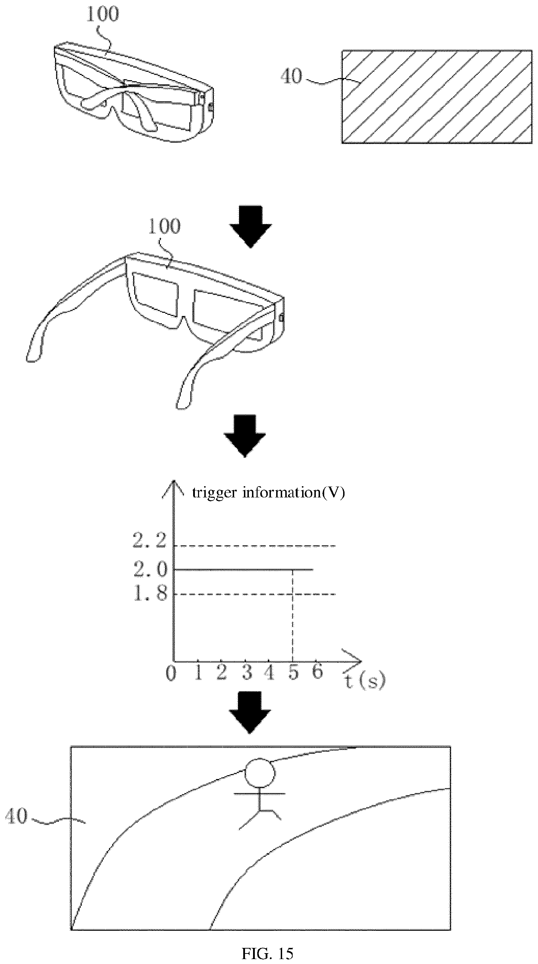

Referring to FIG. 15, in another example, the trigger information includes a voltage, the first preset duration is 5s, and the first preset range is 1.8V-2.2V Before switching, the supporting component 30 is at a first position, the wearable device 100 is in the folded state, the display 40 is turned off, and the current running state of the wearable device 100 is the sleep state. The supporting component 30 of the wearable device 100 is unfolded by the user from the housing 20, and the trigger device 110 collects trigger information. When the voltage maintains the range of 1.8V-2.2V for 5s, it is determined that the trigger information meets the preset condition. It is determined that the supporting component 30 is at the second position based on the trigger information, the wearable device 100 is in the unfolded state, and the target state is the working state. However, the current running state of the wearable device 100 is obtained to be the sleep state, in this case, the wearable device 100 is controlled to switch from the sleep state to the working state based on the trigger information.

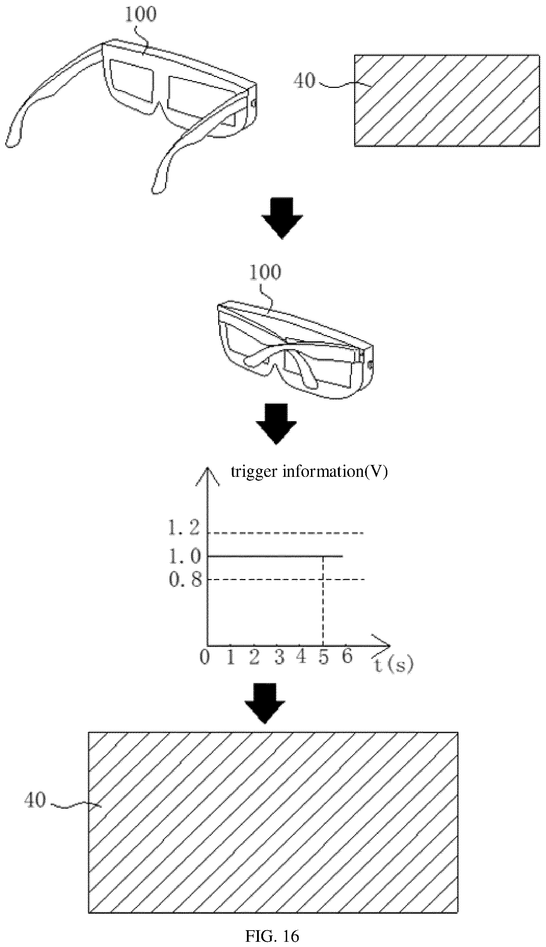

Referring to FIG. 16, in another example, the trigger information includes a voltage, the first preset duration is 5s, and the first preset range is 0.8V-1.2V Before switching, the supporting component 30 is at the second position, the wearable device 100 is in the unfolded state, the display 40 is turned off, and the current running state of the wearable device 100 is the sleep state. The supporting component 30 of the wearable device 100 is folded by the user toward the housing 20, and the trigger device 110 collects trigger information. When the voltage maintains the range of 0.8V-1.2V for 5s, it is determined that the trigger information meets the preset condition. It is determined that the supporting component 30 is at the first position based on the trigger information, the wearable device 100 is in the folded state, and the target state is the sleep state. However, the current running state of the wearable device 100 is obtained to be the sleep state, in this case, the trigger information is ignored.

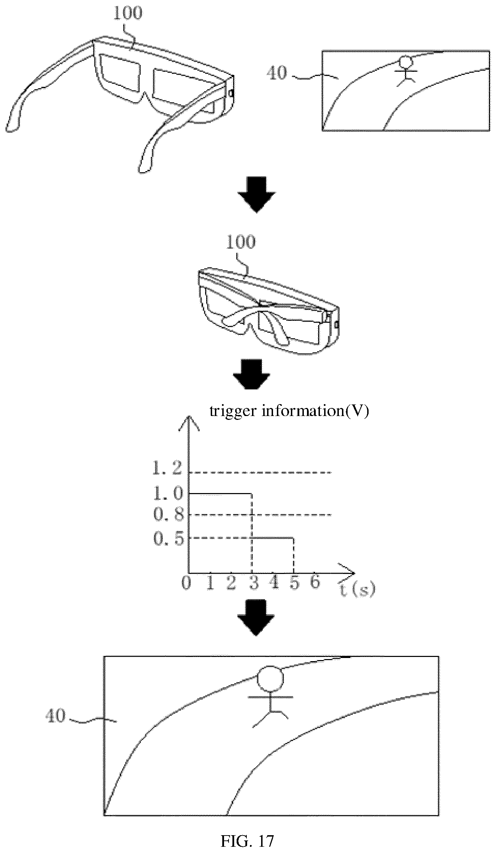

Referring to FIG. 17, in yet another example, the trigger information includes a voltage, the first preset duration is 5s, and the first preset range is 0.8V-1.2V Before switching, the supporting component 30 is at the second position, the wearable device 100 is in the unfolded state, the display 40 is playing a video, and the current running state of the wearable device 100 is the working state. The supporting component 30 of the wearable device 100 is folded by the user toward the housing 20, and the trigger device 110 collects trigger information. When the voltage maintains the range of 0.8V-1.2V for 3s and the voltage skips to 0.5V at the 4^{th} second, it is determined that the trigger information does not meet the preset condition, and trigger information is ignored. The display 40 remains to play the video.

Of course, the first preset duration may be 1s, 3s, 6s or other duration, the trigger information includes a current, a voltage or other signals, and the first preset range may be 0.9V-1.1V, 0.9A-1.1A or other range. The specific value and specific form of the first preset duration, the trigger information and the first preset range are not limited here.

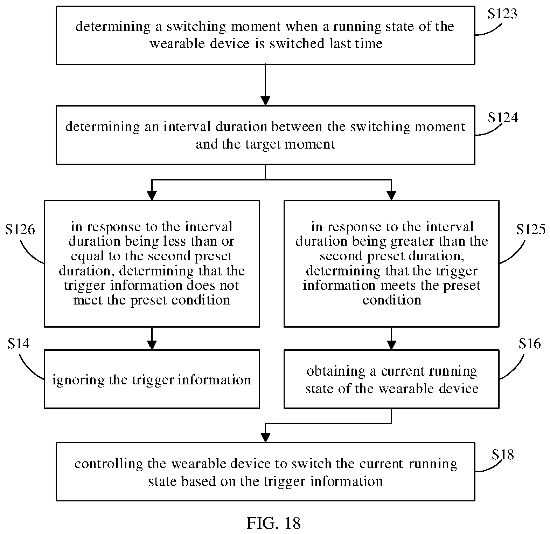

Referring to FIG. 18, in some embodiments, the preset condition includes a second preset duration, and the trigger information includes a target moment. S12 includes: at S123, it is determined a switching moment when a running state of the wearable device 100 is switched last time; at S124, an interval duration between the switching moment and the target moment is determined; at S125, in response to the interval duration being greater than the second preset duration, it is determined that the trigger information meets the preset condition; and at S126, in response to the interval duration being less than or equal to the second preset duration, it is determined that the trigger information does not meet the preset condition.

In some embodiments, the preset condition includes a second preset duration, and the trigger information includes a target moment, the processor 101 is configured to determine a switching moment when a running state of the wearable device 100 is switched last time; and determine an interval duration between the switching moment and the target moment; in response to the interval duration being greater than the second preset duration, determine that the trigger information meets the preset condition; and in response to the interval duration being less than or equal to the second preset duration, determine that the trigger information does not meet the preset condition.

In this way, it is achieved to determine whether trigger information collected by a trigger device of the wearable device 100 meets a preset condition. It may be understood that, there is a certain time difference from collecting the trigger information to switching the state based on the trigger information, a target moment when to switch the state based on the trigger information may be thus determined. When the interval duration between the switching moment when the running state of the wearable device 100 is switched last time and the target moment is less than or equal to the second preset duration, the trigger information is ignored, which may ensure that the interval duration between every two times of switching the state of the wearable device 100 is greater than the second preset duration, which avoids false trigger caused by a shorter interval duration between every two times of switching the state due to device damage or other reasons, and also avoid too much electric quantity consumed due to frequent switching.

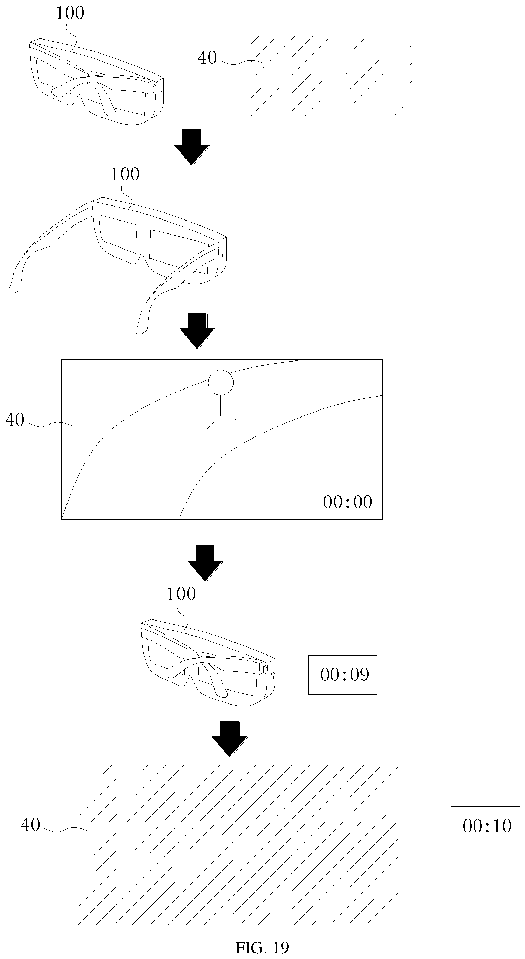

Referring to FIG. 19, in an example, the second preset duration is 300s, and the switching moment when the running state is switched last time is 00:00. At 00:09, the supporting component 30 of the wearable device 100 is folded by the user toward the housing 20, and the trigger device 110 collects trigger information. When the target moment of the trigger information is 00:10, the interval duration is 10 min, which is greater than the second preset duration, it is determined that the trigger information meets the preset condition, and the wearable device 100 is in the folded state based on the trigger information, and the target state is the sleep state. However, the current running state of the wearable device 100 is obtained to be the working state, in this case, the wearable device 100 is controlled to switch from the working state to the sleep state based on the trigger information.

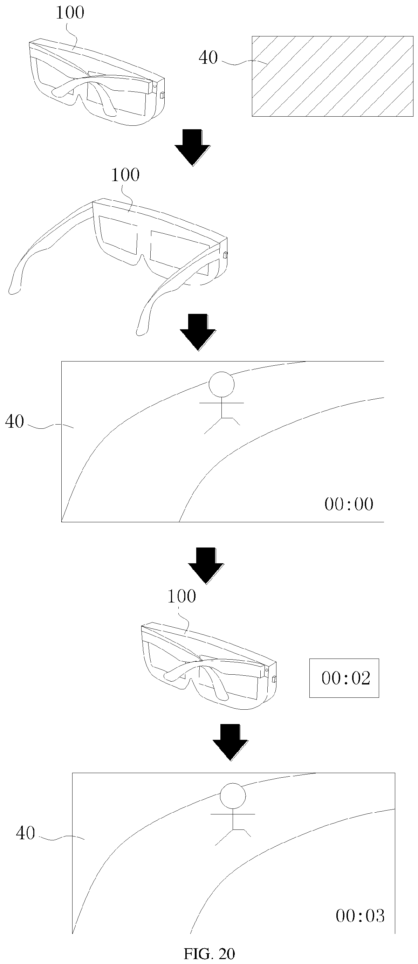

Referring to FIG. 20, in another example, the second preset duration is 300s, and the switching moment when the running state is switched last time is 00:00. At 00:02, the supporting component 30 of the wearable device 100 is folded by the user toward the housing 20, and the trigger device 110 collects trigger information. When the target moment of the trigger information is 00:03, the interval duration is 3 min, which is less than the second preset duration, it is determined that the trigger information does not meet the preset condition, and trigger information is ignored.

Of course, the second preset duration may be 100s, 200s, 400s or other value. The specific value of the second preset duration is not limited here.

It should be noted that, the switching moment when the running state is switched last time is updated after the wearable device 100 is controlled to switch the running state each time.

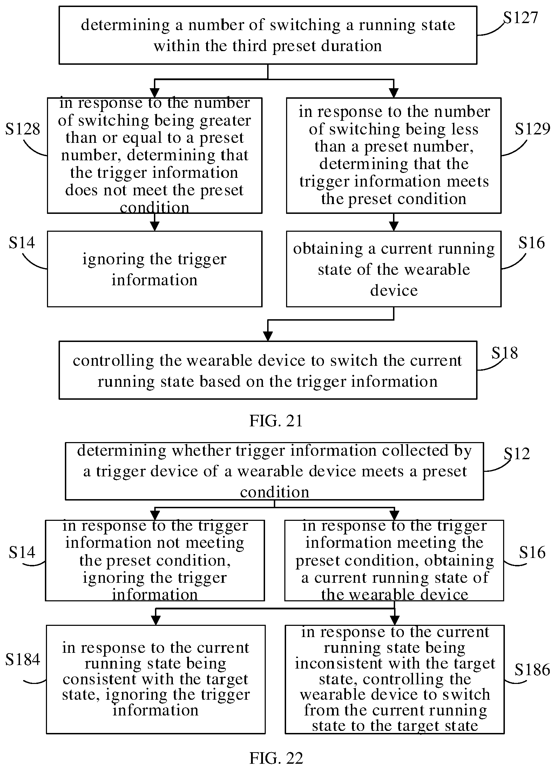

Referring to FIG. 21, in some embodiments, the preset condition includes a third preset duration, and the trigger information includes a target moment. S12 includes: at S127, a number of switching a running state within the third preset duration before the target moment is determined; at S 128, in response to the number of switching being greater than or equal to a preset number, it is determined that the trigger information does not meet the preset condition; and at S129, in response to the number of switching being less than the preset number, it is determined that the trigger information meets the preset condition.

In some embodiments, the preset condition includes a third preset duration, and the trigger information includes a target moment, the processor 101 is configured to determine a number of switching a running state within the third preset duration before the target moment; in response to the number of switching being greater than or equal to a preset number, determine that the trigger information does not meet the preset condition; and in response to the number of switching being less than the preset number, determine that the trigger information meets the preset condition.

In this way, it is achieved to determine whether trigger information collected by a trigger device 110 of the wearable device 100 meets a preset condition. It may be understood that, in response to the number of switching the running state being greater than or equal to the preset number within the third preset duration, it may be inferred that the switching of the running state is too frequent, at this time, it is determined that the trigger information does not meet the preset condition, and the trigger information is thus ignored, which may ensure the switching of the running state of the wearable device 100 is not too frequent. In this way, false trigger caused by device damage or other reasons is avoided, and too much electric quantity consumed due to frequent switching is also avoided.

In an example, the third preset duration is 7200s, the preset number is 10, the target moment is 2:00, when the number of switching the running state of the wearable device 100 within 0:00-2:00 is 8, which is less than the preset number, it is determined that the trigger information meets the preset condition, and it may be parsed to know that the wearable device 100 is in the folded state, and the target state is the sleep state. However, the current running state of the wearable device 100 is obtained to be the working state, in this case, the wearable device 100 is controlled the working state to the sleep state based on the trigger information.

In another example, the third preset duration is 7200s, the preset number is 10, the target moment is 2:00, when the number of switching the running state of the wearable device 100 within 0:00-2:00 is 10, which is equal to a preset number, it may be determined that the trigger information does not meet the preset condition, and trigger information is ignored.

The third preset duration may be 1000s, 5000s, 8000s or other value. The specific value of the third preset duration is not limited here.

The preset number may be 5, 8, 12 or other value. The specific value of the preset number is not limited here. It should be noted that the preset number is updated after the wearable device 100 is controlled to switch the current running state each time.

Referring to FIG. 22, in some embodiments, the trigger information includes a target state. S18 includes: at S184: in response to the current running state being consistent with the target state, the trigger information is ignored; and at S 186: in response to the current running state being inconsistent with the target state, the wearable device is controlled to be switched from the current running state to the target state.

In some embodiments, the trigger information includes a target state, the processor 101 is configured to ignore the trigger information in response to the current running state being consistent with the target state; control the wearable device 100 to switch from the current running state to the target state in response to the current running state being inconsistent with the target state.

Thus, it is achieved that the wearable device 100 is controlled to switch the current running state based on the trigger information. It may be understood that, in response to the current running state being consistent with the target state, i.e., the current running state is the target state, the trigger information may be ignored without necessarily controlling the wearable device to switch based on the trigger information. In response to the current running state being inconsistent with the target state, in order to achieve switching to the target state, the wearable device needs to be controlled to switch from the current running state to the target state.

In addition, "the trigger information includes the target state" refers to that the target state may be determined based on the trigger information. Further, as described above, in the embodiment, the relative position relationship between the supporting component 30 and the housing 20 may be determined based on the trigger information, which accordingly infers the target state.

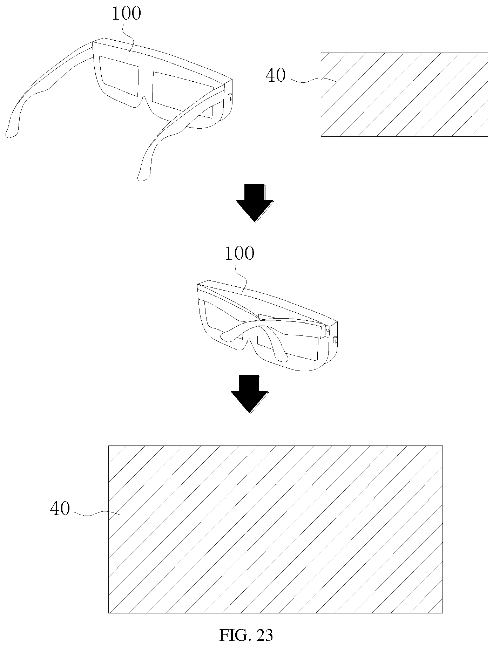

Referring to FIG. 23, in an example, the supporting component 30 is originally unfolded from the housing 20, and the wearable device 100 is in an unfolded state, however, the display 40 is turned off and in a sleep state. The supporting component 30 is folded by the user towards the housing 20. The trigger device 110 collects trigger information. When it is determined that the supporting component 30 is folded towards the housing 20 based on the trigger information, the wearable device 100 is in the folded state. It may be inferred that the user has taken off the wearable device 100 and does not use the wearable device 100 temporarily, which accordingly determines that the target state is the sleep state. At this time, the current running state is just the sleep state, which is consistent with the target state, in this case, the running state is not necessarily switched, and the trigger information may be ignored.

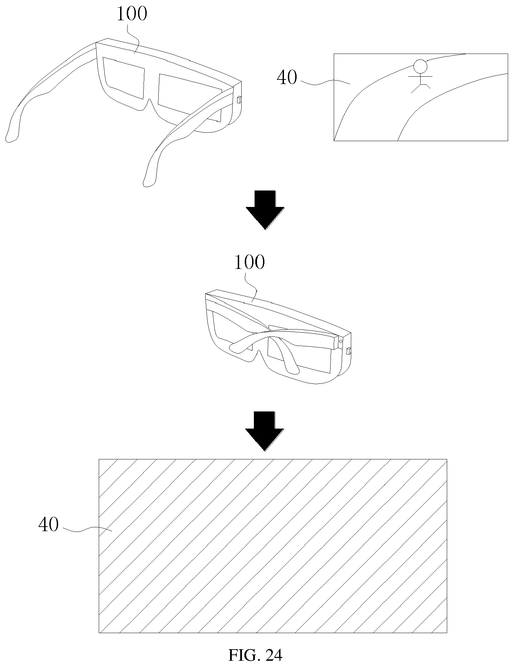

Referring to FIG. 24, in another example, the supporting component 30 is originally unfolded from the housing 20, and the wearable device 100 is in the unfolded state, the display 40 is playing a video and in a working state. The supporting component 30 is folded by the user towards the housing 20. The trigger device 110 collects trigger information. When it is determined that the supporting component 30 is folded towards the housing 20 based on the trigger information, the wearable device 100 is in the folded state, it may be inferred that the user has taken off the wearable device 100 and does not use the wearable device 100 temporarily, which accordingly determines that the target state is the sleep state. At this time, the current running state is the working state, which is inconsistent with the target state, in this case, the wearable device 100 is controlled to switch from the working state to the sleep state.

Of course, the current running state and the target state are not limited to the above examples. For example, in other embodiments, the current running state may include a working state, a low power consumption state, and a sleep state. The target state may include a working state, a low power consumption state, and a sleep state. The specific type and number of the current running state and the target state are not limited here.

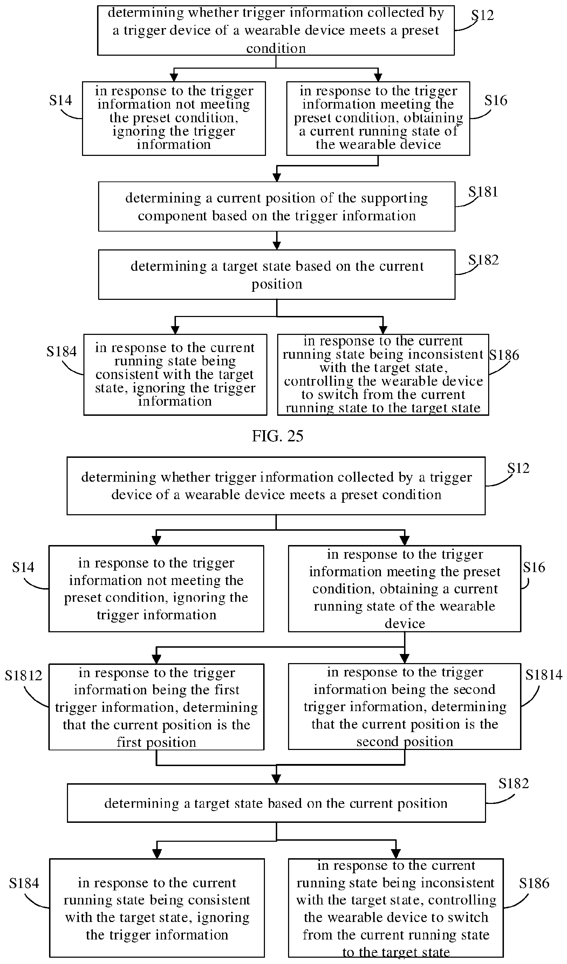

Referring to FIG. 25, in some embodiments, the wearable device 100 includes a housing 20 and a supporting component 30 rotatably connected to the housing 20, the trigger device 110 is disposed on the supporting component 30 and the housing 20. S18 includes: at S181, a current position of the supporting component is determined based on the trigger information; and at S 182, the target state is determined based on the current position.

In some embodiments, the wearable device 100 includes a housing 20 and a supporting component 30 rotatably connected to the housing 20, the trigger device 110 is disposed on the supporting component 30 and the housing 20, and the processor 101 is configured to determine a current position of the supporting component 30 based on the trigger information; and determine the target state based on the current position.

In this way, it is achieved that the target state may be determined based on the trigger information. It may be understood that, since the trigger device 110 is disposed on the supporting component 30 and the housing 20, the current position of the support component 30 relative to the housing 20 may be determined based on the trigger information, which accordingly infers the user's intention to place the supporting component 30 at the current position, and further determines a target state.

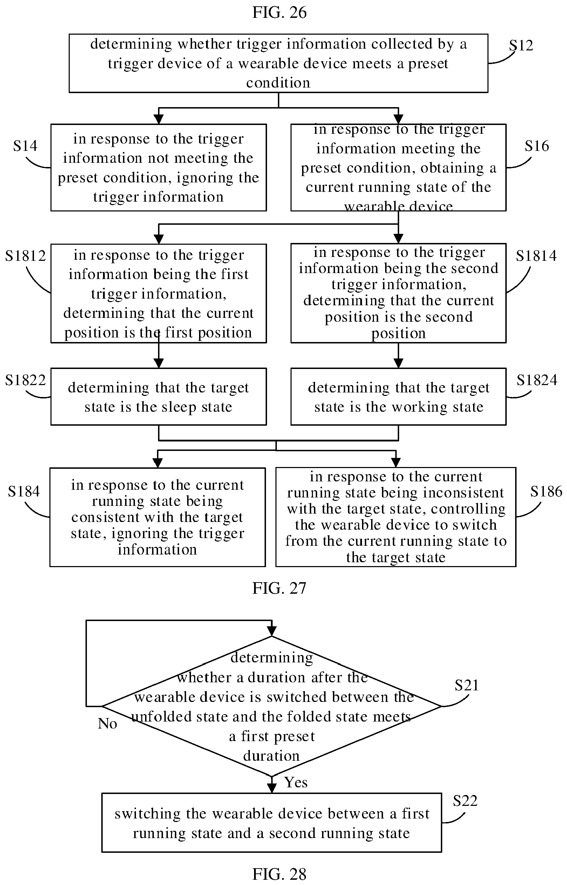

Referring to FIG. 26, in some embodiments, the supporting component is rotated between a first position and a second position relative to the housing 20, and the trigger information includes first trigger information and second trigger information. S181 includes: at S1812, in response to the trigger information being the first trigger information, it is determined that the current position is the first position; and at S1814, in response to the trigger information being the second trigger information, it is determined that the current position is the second position.

In some embodiments, the supporting component 30 is rotated between a first position and a second position relative to the housing 20, the trigger information includes first trigger information and second trigger information, and the processor 101 is configured to determine that the current position is the first position in response to the trigger information being the first trigger information; and determine that the current position is the second position in response to the trigger information being the second trigger information.

In this way, it is achieved that the current position of the supporting component 30 is determined based on the trigger information. In the embodiment, the first position is illustrated in FIG. 9 and FIG. 11, and the second position is illustrated in FIG. 12. It may be understood that, when the current position of the supporting component 30 is the first position, the trigger device 10 outputs the first trigger information based on the current position of the supporting component 30. Therefore, in response to the trigger information being the first trigger information, it may be determined that the current position is the first position. In response to the trigger information being the second trigger information, the principle of determining the current position as the second position is similar to that of determining the first position, which will not be repeated here to avoid redundancy.

In an example, the first trigger information is 1.0V, the second trigger information is 2.0V, and the collected trigger information is 1.0V, it may be determined that the trigger information is the first trigger information, which accordingly determines that the current position is the first position as illustrated in FIG. 9 and FIG. 11.

In another example, the first trigger information is 1.0V, the second trigger information is 2.0V, and the collected trigger information is 2.0V, it may be determined that the trigger information is the second trigger information, which accordingly determines that the current position is the second position as illustrated in FIG. 12.

It should be noted that, the trigger information may further include third trigger information, fourth trigger information, etc. The current position may further include a third position, a fourth position, etc. The type and number of trigger information and the type and number of the current position are not limited here.

In addition, the wearable device 100 may pre-store a corresponding relationship between the trigger information and the current position. After the trigger information is collected, the current position is determined based on the trigger information and the corresponding relationship. Further, the corresponding relationship between the trigger information and the current position may be stored in the wearable device 100 in the form of a table.

Referring to FIG. 27, in some embodiments, the current position includes a first position and a second position, and the target state includes a sleep state and a working state. S182 includes: at S 1822, in response to the current position being the first position, it is determined that the target state is the sleep state; and at S 1824, in response to the current position being the second position, it is determined that the target state is the working state.

In some embodiments, the current position includes a first position and a second position, and the target state includes a sleep state and a working state, the processor 101 is configured to determine that the target state is the sleep state in response to the current position being the first position; and determine that the target state is the working state in response to the current position being the second position.

In this way, it is achieved that the target state is determined based on the current position. It may be understood that, when the current position is the first position, the wearable device 100 is in the folded state, as illustrated in FIG. 9 and FIG. 11, it may be inferred that the user has taken off the wearable device 100 and does not use the wearable device 100 temporarily, which accordingly determines that the target state is the sleep state. When the current position is the second position, the wearable device 100 is in the unfolded state, as illustrated in FIG. 12, it may be inferred that the user wants to wear and use the wearable device 100, which accordingly determines that the target state is the working state.

Specifically, "sleep state" herein refers to that various functional components of the wearable device 100 are closed without wakeup and may not work. "working state" herein refers to that various functional components of the wearable device 100 work well. It may be understood that switching from the working state to the sleep state may save energy and reduce the power consumption of the wearable device 100. Switching from the sleep state to the working state may wake up the wearable device 100 so that the wearable device 100 works well.

Referring to FIG. 14, in an example, the first trigger information is 1.0V, and the second trigger information is 2.0V. The supporting component 30 is originally unfolded from the housing 20, the wearable device 100 is in the unfolded state, while the display 40 is playing a video and in a working state. The supporting component 30 is folded by the user towards the housing 20, and the trigger device 110 collects trigger information. The collected trigger information is 1.0V, it may be determined that the trigger information is the first trigger information, which accordingly determines the current position is the first position and the target state is the sleep state. However, the current running state of the wearable device 100 is obtained to be the working state, in this case, the wearable device 100 is controlled to switch from a working state to a sleep state based on the trigger information, and functional components such as an application processor (AP), a wifi, a display 40 and a camera are turned off.

In another example, the first trigger information is 1.0V, and the second trigger information is 2.0V. The supporting component 30 is originally unfolded from the housing 20, the wearable device 100 is in the unfolded state, while the display 40 is playing a video and in a working state. The supporting component 30 is folded towards the housing 20, and the trigger device 110 collects trigger information. The collected trigger information is 1.0V, it may be determined that the trigger information is the first trigger information, which accordingly determines the current position is the first position and the target state is the sleep state. The current running state of the wearable device 100 is obtained to be just the sleep state, in this case, the trigger information is ignored.

Referring to FIG. 15, in another example, the first trigger information is 1.0V, and the second trigger information is 2.0V The supporting component 30 is originally folded towards the housing 20, and the wearable device is in the folded state, however, the display 40 is turned off and in the sleep state. The supporting component 30 is unfolded from the housing 20 by the user, and the trigger device 110 collects trigger information. The collected trigger information is 2.0V, it may be determined that the trigger information is the second trigger information, which accordingly determines the current position is the second position and the target state is the working state. However, the current running state of the wearable device 100 is obtained to be the sleep state, in this case, the wearable device 100 is controlled to switch from the sleep state to the working state based on the trigger information, and functional components such as an application processor (AP), a wifi, a display 40 and a camera are started so that the wearable device 100 works well.

In another example, the first trigger information is 1.0V, and the second trigger information is 2.0V. The supporting component 30 is originally folded towards the housing 20, and the wearable device 100 is in the folded state, however, the display 40 is turned off, and in the sleep state. The supporting component 30 is unfolded from the housing 20 by the user, and the trigger device 110 collects trigger information. The collected trigger information is 2.0V, it may be determined that the trigger information is the second trigger information, which accordingly determines the current position is the second position and the target state is the working state. The current running state of the wearable device 100 is just the working state, in this case, the trigger information is ignored.

Referring to FIG. 28, the embodiment in the disclosure provides a method for controlling a wearable device 100. The wearable device 100 includes a housing 20 and a supporting component 30 rotatably connected to the housing 20. The supporting component 30 is rotated between a first position and a second position relative to the housing 20. The wearable device 100 is in the folded state when the supporting component 30 is at the first position, and the wearable device 100 is in the unfolded state when the supporting component 30 is at the second position. The control method includes: at S21, it is determined whether a duration after the wearable device 100 is switched between the unfolded state and the folded state meets a first preset duration; and at S22, in response to the duration meeting the first preset duration, the wearable device 100 is switched between a first running state and a second running state. The first running state is a running state corresponding to the unfolded state of the wearable device 100, and the second running state is a running state corresponding to the folded state of the wearable device 100.

In the method for controlling a wearable device 100 in the embodiment of the disclosure, in response to a duration after the wearable device 100 is switched between the unfolded state and the folded state meeting a first preset duration, the wearable device 100 is switched between a first running state and a second running state, which may avoid false trigger caused by the instability of an unfolded state and a folded state, which accordingly improves the accuracy of switching between the first running state and the second running state.

It should be noted that, the method for controlling a wearable device 100 in the embodiment may refer to explanation and description of embodiments corresponding to FIG. 13-FIG. 17, which will not be repeated here to avoid redundancy.

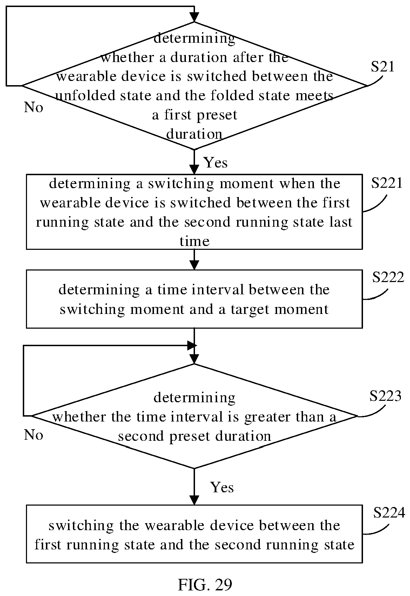

Referring to FIG. 29, in some embodiments, S22 includes: at S221, a switching moment when the wearable device 100 is switched between the first running state and the second running state last time is determined; at S222, a time interval between the switching moment and a target moment is determined, in which the target moment is a moment when the wearable device 100 is switched between the first running state and the second running state this time; at S223, it is determined whether the time interval is greater than a second preset duration; and at S224, in response to the time interval being greater than the second preset duration, the wearable device 100 is switched between the first running state and the second running state.

It should be noted that, the method for controlling a wearable device 100 in the embodiment may refer to explanation and description of embodiments corresponding to FIG. 18-FIG. 20, which will not be repeated here to avoid redundancy.

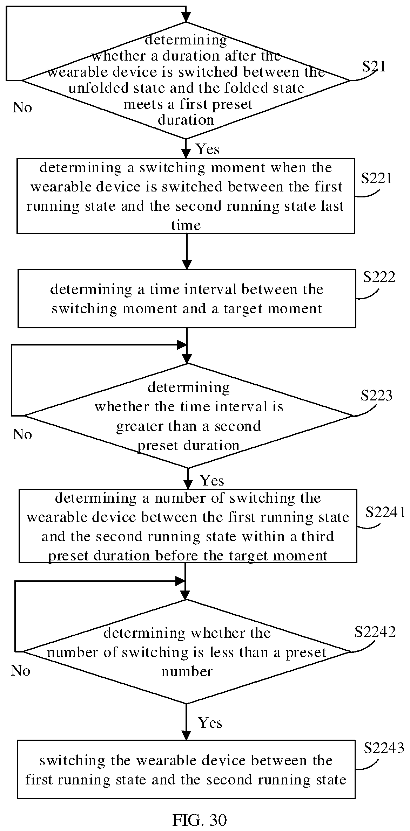

Referring to FIG. 30, in some embodiments, S224 includes: at S2241, a number of switching the wearable device 100 between the first running state and the second running state within a third preset duration before the target moment is determined; at S2242, it is determined whether the number of switching is less than a preset number; and at S2243, in response to the number of switching being less than the preset number, the wearable device 100 is switched between the first running state and the second running state.

It should be noted that, the method for controlling a wearable device 100 in the embodiment may refer to explanation and description of embodiments corresponding to FIG. 21, which will not be repeated here to avoid redundancy.

The embodiment of the disclosure further provides a non-transitory computer readable storage medium. A non-transitory computer readable storage medium has one or more computer executable instructions. When the computer executable instructions are executed by one or more processors 101, the processor 101 is caused to execute the control method in the above any embodiment.

For the computer readable storage medium in the embodiment of the disclosure, when the trigger information meets the preset condition, the wearable device 100 is controlled to switch the current running state based on the trigger information, so that it is simply and conveniently achieve that the current running state of the wearable device 100 may be switched, which accordingly saves power consumption and prolongs the battery life time, and be conductive to improving the user experience.

In summary, in the control method, the wearable device 100 and the computer readable storage medium in the embodiment of the disclosure, the running state is switched based on the relative position of the supporting component 30 and the housing 20 of the wearable device 100. When the wearable device 100 is in the folded state, it may be inferred that the user does not use the wearable device 100, and the wearable device 100 is in the sleep state, which accordingly saves power and enhances the battery life of the wearable device 100. The high power consumption and poor endurance capability of the existing wearable device are solved. When the wearable device 100 is in the unfolded state, it may be inferred that the user uses the wearable device 100, and the wearable device 100 is controlled to be into a working state without necessarily rebooting. The system is awakened rapidly to enter a normal working state, which may improve the user experiences. In addition, the operation of triggering the wearable device 100 to enter the working state or the sleep state is simple and convenient without tedious operations such as pressing a power key for a long time and only with folding or unfolding the wearable device 100, which greatly improves the user experiences. There may be at least one trigger device 110, such as a button, an infrared sensor, etc., without expensive and complicated sensors, with low cost and a simple process, and easy to implement. Furthermore, the trigger condition is simple without a complicated intelligent algorithm, simple and stable in logic judgment, therefore, the software is easy to implement. In addition, the setting of the preset condition in the embodiment may achieve anti-shaking of trigger information, which effectively reduces the probability that the running state of the wearable device 100 is frequently switched due to false trigger, improves the stability of the wearable device 100, and reduces the power consumption caused by frequent switching of the running state of wearable device 100.

Those skilled in the art may understand that all or part of processes in the above embodiments may be implemented by instructing relevant hardware by computer programs. The programs may be stored in a non-transitory computer readable storage medium, and may be executed to implement the above processes in the method embodiments. The storage medium may be a magnetic disk, an optical disk, a read-only memory (ROM), etc.

The above embodiments only express several embodiments of the disclosure, and the descriptions are specific and detailed, however, it may not be understood as a limitation to the scope of the disclosure. It should be noted that, for those skilled in the art, several variations and improvements may be made without departing from the conception of the disclosure, which belongs to the protection scope of the disclosure. Therefore, the protection scope of the disclosure shall be subject to the claims.

## Claims

1. A method for controlling a wearable device, comprising:
determining whether trigger information collected by a trigger device of the wearable device meets a preset condition;
ignoring the trigger information in response to the trigger information not meeting the preset condition;
obtaining a current running state of the wearable device in response to the trigger information meeting the preset condition; and
controlling the wearable device to switch the current running state based on the trigger information.

2. The method of claim 1, wherein, the preset condition comprises a first preset duration and a first preset range, and determining whether trigger information collected by a trigger device of the wearable device meets a preset condition, comprises:
determining that the trigger information meets the preset condition in response to the trigger information being in the first preset range within the first preset duration; and
determining that the trigger information does not meet the preset condition in response to the trigger information being not in the first preset range within the first preset duration.

3. The method of claim 1, wherein, the preset condition comprises a second preset duration, the trigger information comprises a target moment, and determining whether trigger information collected by a trigger device of the wearable device meets a preset condition, comprises:
determining a switching moment when a running state of the wearable device is switched last time;
determining an interval duration between the switching moment and the target moment;
determining that the trigger information meets the preset condition in response to the interval duration being greater than the second preset duration; and
determining that the trigger information does not meet the preset condition in response to the interval duration being less than or equal to the second preset duration.

4. The method of claim 1, wherein, the preset condition comprises a third preset duration, the trigger information comprises a target moment, and determining whether trigger information collected by a trigger device of the wearable device meets a preset condition, comprises:
determining a number of switching a running state within the third preset duration before the target moment;
determining that the trigger information does not meet the preset condition in response to the number of switching being greater than or equal to a preset number; and
determining that the trigger information meets the preset condition in response to the number of switching being less than the preset number.

5. The method of claim 1, wherein, the trigger information comprises a target state, controlling the wearable device to switch the current running state based on the trigger information, comprises:
ignoring the trigger information in response to the current running state being consistent with the target state; and
controlling the wearable device to switch from the current running state to the target state in response to the current running state being inconsistent with the target state.

6. The method of claim 5, wherein, the wearable device comprises a housing and a supporting component rotatably connected to the housing, the trigger device is disposed on the supporting component and the housing, and controlling the wearable device to switch the current running state based on the trigger information, comprises:
determining a current position of the supporting component based on the trigger information; and
determining the target state based on the current position.

7. The method of claim 6, wherein, the supporting component is rotated between a first position and a second position relative to the housing, the trigger information comprises first trigger information and second trigger information, and determining a current position of the supporting component based on the trigger information, comprises:
determining that the current position is the first position in response to the trigger information being the first trigger information; and
determining that the current position is the second position in response to the trigger information being the second trigger information.

8. The method of claim 6, wherein, the current position comprises a first position and a second position, the target state comprises a sleep state and a working state, and determining the target state based on the current position, comprises:
determining that the target state is the sleep state in response to the current position being the first position; and
determining that the target state is the working state in response to the current position being the second position.

9. A method for controlling a wearable device, wherein, the wearable device comprises a housing and a supporting component rotatably connected to the housing, the supporting component is rotated between a first position and a second position relative to the housing, the wearable device is in a folded state at the first position, and the wearable device is in an unfolded state at the second position, the method comprising:
determining whether a duration after the wearable device is switched between the unfolded state and the folded state meets a first preset duration; and
in response to the duration meeting the first preset duration, switching the wearable device between a first running state and a second running state, the first running state being a running state corresponding to the unfolded state of the wearable device, and the second running state being a running state corresponding to the folded state of the wearable device.

10. The method of claim 9, wherein, switching the wearable device between a first running state and a second running state, comprises:
determining a switching moment when the wearable device is switched between the first running state and the second running state last time;
determining a time interval between the switching moment and a target moment, the target moment being a moment when the wearable device is switched between the first running state and the second running state this time;
determining whether the time interval is greater than a second preset duration; and
in response to the time interval being greater than the second preset duration, switching the wearable device between the first running state and the second running state.

11. The method of claim 10, wherein, switching the wearable device between a first running state and a second running state, comprises:
determining a number of switching the wearable device between the first running state and the second running state within a third preset duration before the target moment;
determining whether the number of switching is less than a preset number; and
in response to the number of switching being less than the preset number, switching the wearable device between the first running state and the second running state.

12. A wearable device, wherein, the wearable device comprises a processor, a trigger device, a housing and a supporting component rotatably connected to the housing, the trigger device is disposed on the supporting component and the housing, the processor is connected to the trigger device, and the processor is configured to determine whether trigger information collected by the trigger device of the wearable device meets a preset condition; ignore the trigger information in response to the trigger information not meeting the preset condition; obtain a current running state of the wearable device in response to the trigger information meeting the preset condition; and control the wearable device to switch the current running state based on the trigger information.

13. The wearable device of claim 12, wherein, the preset condition comprises a first preset duration and a first preset range, and the processor is configured to determine that the trigger information meets the preset condition in response to the trigger information being in the first preset range within the first preset duration; and determine that the trigger information does not meet the preset condition in response to the trigger information being not in the first preset range within the first preset duration.

14. The wearable device of claim 12, wherein, the preset condition comprises a second preset duration, and the trigger information comprises a target moment, the processor is configured to determine a switching moment when a running state of the wearable device is switched last time; determine an interval duration between the switching moment and the target moment; determine that the trigger information meets the preset condition in response to the interval duration being greater than the second preset duration; and determine that the trigger information does not meet the preset condition in response to the interval duration being less than or equal to the second preset duration.

15. The wearable device of claim 12, wherein, the preset condition comprises a third preset duration, and the trigger information comprises a target moment, the processor is configured to determine a number of switching a running state within the third preset duration before the target moment; determine that the trigger information does not meet the preset condition in response to the number of switching being greater than or equal to a preset number; and determine that the trigger information meets the preset condition in response to the number of switching being less than the preset number.

16. The wearable device of claim 12, wherein, the trigger information comprises a target state, the processor is configured to ignore the trigger information in response to the current running state being consistent with the target state; andcontrol the wearable device to switch from the current running state to the target state in response to the current running state being inconsistent with the target state.

17. The wearable device of claim 16, wherein, the wearable device comprises a housing and a supporting component rotatably connected to the housing, the trigger device is disposed on the supporting component and the housing, the processor is configured to determine a current position of the supporting component based on the trigger information; and determine the target state based on the current position.

18. The wearable device of claim 17, wherein, the supporting component is rotated between a first position and a second position relative to the housing, and the trigger information comprises first trigger information and second trigger information, the processor is configured to determine that the current position is the first position in response to the trigger information being the first trigger information; and determine that the current position is the second position in response to the trigger information being the second trigger information.

19. The wearable device of claim 17, wherein, the current position comprises a first position and a second position, and the target state comprises a sleep state and a working state, the processor is configured to determine that the target state is the sleep state in response to the current position being the first position; and determine that the target state is the working state in response to the current position being the second position.

20. A non-transitory computer readable storage medium having computer executable instructions, wherein, when the computer executable instructions are executed by one or more processors, the processor is caused to execute the method of any of claims 1 to 8 or the method of any of claims 9 to 11.
